# FASCICULE DE BREVET EUROPEEN

(11) **EP 0 846 734 B1**
(45) Date de publication et mention de la délivrance du brevet: **10.05.2000**
(21) Numéro de dépôt: 97402916.7
(22) Date de dépôt: 03.12.1997
(51) Int. Cl.: C09D 9/00

(54) **Composition décapante pour peintures, vernis ou laques**
Abbeizmittel zur Entfernung von Farb- und Lackbeschichtungen
Paint stripper for removing coatings and lacquers

(30) Priorité: 06.12.1996 FR 9615040
(43) Date de publication de la demande: 10.06.1998
(73) Titulaire: ELF ATOCHEM S.A., 92800 Puteaux, Hauts-de-Seine (FR)
(72) Inventeur: Lallier, Jean-Pierre, 92400 Courbevoie (FR); Marie, Patrick, 78800 Houilles (FR); Aubry, Jean-Marie, 62590 Oignies (FR); Marti, Marie-José, Clos de la Quieze, 59242 Templeuve (FR); Del Nero, Valérie, 59000 Lille (FR)
(74) Mandataire: Chaillot, Geneviève

(56) Documents cités:
- EP-A- 0 497 130
- US-A- 3 322 677
- US-A- 4 732 695

## Description

La présente invention concerne une composition décapante de peintures, vernis ou laques recouvrant un substrat.

Dans le domaine du décapage des peintures, vernis ou laques, la tendance actuelle est de développer des formulations aqueuses efficaces en utilisant le moins possible de solvant, afin de limiter les effets sur l'environnement. Cependant, les formulations aqueuses qui sont actuellement développées sont peu efficaces et, pour cette raison, aucune d'entre elles n'est citée dans Encyclopedia of Chemical Technology de KIRK-OTHMER (4^{ème} édition, 1996, vol. 17).

La demande de brevet internationale WO 93/07227 divulgue l'addition d'eau à des solvants ou à des mélanges de solvants estimés efficaces pour le décapage des peintures. Ce document décrit des compositions contenant :
(1) au moins un solvant organique choisi parmi l'acétate d'éthyle, la méthyl éthyl cétone, le toluène ;
(2) de l'eau ;
(3) au moins un épaississant et
(4) au moins un surfactant.

L'efficacité de ces compositions est simplement proportionnelle à la quantité de solvant organique utilisée et, de toute façon, inférieure à l'efficacité du solvant pur. Ceci est, en particulier, vrai pour le toluène, solvant le plus apte parmi les trois cités à décaper les peintures.

Par ailleurs, dans le cas des formulations totalement solvantées, il est d'usage d'utiliser des activateurs acides ou basiques (généralement, moins de 20% en poids de la formulation totale). Parmi les activateurs acides, on trouve le plus souvent l'acide citrique, l'acide formique et l'acide acétique. L'acide formique est le plus efficace et le plus couramment utilisé (Encyclopedia of Chemical Technology de KIRK-OTHMER, 4^{ème} édition, 1996, vol. 17). Cependant, cet acide peut provoquer des graves brûlures, et il est donc primordial de développer des formulations activées par des acides moins corrosifs.

La présente invention a pour but de proposer une composition décapante pour peintures, vernis et laques, qui n'ait pas les inconvénients de l'état antérieur de la technique.

A cet effet, la Société déposante a découvert d'une manière surprenante, que l'acide benzoïque, non cité dans la littérature comme activateur acide, présente d'excellentes performances pour cette fonction d'activateur acide, à la condition de l'associer avec un solvant aromatique, lequel peut avantageusement être du benzaldéhyde commercial, lequel contient déjà l'acide benzoïque précité. Par ailleurs, il a été découvert que les compositions décapantes résultantes peuvent comporter une quantité importante d'eau, tout en conservant pour autant une efficacité de décapage élevé. Il a été en effet obtenu des synergies intéressantes entre l'eau et le benzaldéhyde commercial, ce dernier pouvant être remplacé par un autre solvant aromatique additivé d'acide benzoïque.

La présente invention a donc d'abord pour objet une composition décapante pour peintures, vernis ou laques recouvrant un substrat, caractérisée par le fait qu'elle est constituée par ou qu'elle comprend :
(A) un mélange (A1) d'au moins un solvant aromatique choisi parmi le benzaldéhyde, le toluène, le xylène et l'anisole et (A2) d'acide benzoïque ;
(B) jusqu'à 99 parties en poids d'eau ;
(A) + (B) représentant au total 100 parties en poids.

Conformément à un premier mode de réalisation particulièrement intéressant de la composition selon l'invention, (A) est constitué par un benzaldéhyde commercial, lequel contient alors déjà de l'acide benzoïque. (A) peut alors représenter avantageusement 5 à 10 parties en poids de (A) + (B).

Selon un autre mode de réalisation, pour tous les systèmes, les différents composants peuvent, par exemple, être présents dans les proportions suivantes :

| | | |
|---|---|---|
| (A1) | solvant(s) aromatique(s) | 30-70 parties en poids |
| (A2) | acide benzoïque | 0,05-10 parties en poids |
| (B) | eau | 30-70 parties en poids. |

A la connaissance de la Société déposante, le benzaldéhyde n'est pas cité dans la littérature concernant le décapage des peintures. Or ce solvant s'est révélé performant pour le décapage des peintures s'il n'est pas distillé et utilisé sous atmosphère inerte. Dans ce cas, il contient toujours une proportion variable d'acide benzoïque. En flacon commercial, le taux d'acide benzoïque reste égal ou inférieur à 1% en poids, mais, pendant l'opération du décapage (à l'air), ce taux peut augmenter considérablement (oxydation par l'air pouvant être catalysée par le film de peinture). Les inventeurs ont fréquemment observé un sel d'acide benzoïque lors du décapage par une formulation contenant du benzaldéhyde commercial, et ont ainsi découvert que l'association eau-benzaldéhyde pur-acide benzoïque était particulièrement efficace. Un moyen astucieux de faire le mélange benzaldéhyde pur-acide benzoïque est d'utiliser le benzaldéhyde commercial. Cette association est encore plus performante que l'association eau-toluène-acide benzoïque et peut comprendre une majorité d'eau. Le benzaldéhyde commercial a donc la possibilité de fonctionner à la fois comme solvant et comme activateur.

La composition selon l'invention peut également contenir au moins un additif choisi parmi :
- les activateurs, tels que le benzoate de sodium, et, dans le cas où le solvant aromatique est le benzaldéhyde, le toluène, à raison notamment de 0,1 à 10 parties en poids par rapport à (A) + (B) (comme indiqué ci-après, le benzoate de sodium joue également le rôle d'inhibiteur de corrosion) ;
- les épaississants, tels que les épaississants acryliques et cellulosiques, à raison notamment de 0,1 à 10 parties en poids par rapport à (A) + (B) ; comme exemple d'épaississant cellulosique, on peut citer le METHOCELL 311, commercialisé par la Société DOW CHEMICAL Co, dont le procédé d'obtention figure dans le brevet américain US-A-3 388 082 intitulé "Hydroxypropyl methyl cellulose ethers" ;
- les inhibiteurs de corrosion, tels que la monoéthanolamine, le benzoate de sodium ou l'acide citrique, à raison notamment de 0,1 à 10 parties en poids par rapport à (A) + (B) ;
- les retardateurs d'évaporation, tels que la paraffine, à raison notamment de 0,1 à 10 parties en poids par rapport à (A) + (B); et
- les agents tensio-actifs, tels que les agents tensio-actifs non-ioniques, à raison notamment de 0,1 à 10 parties en poids par rapport à (A) + (B) ; comme exemples d'agents tensio-actifs non-ioniques, on peut citer les agents tensio-actifs éthoxylés de la série "METOX", commercialisés par la Société "SEPPIC".

L'eau et le solvant aromatique (de préférence benzaldéhyde commercial ou toluène par exemple) ne sont pas miscibles entre eux. Il en résulte qu'on se trouve en présence d'une émulsion eau-solvant aromatique. Cette émulsion est très instable et on observe rapidement la séparation des deux phases. Pour utiliser cette émulsion telle quelle, il est nécessaire d'avoir une vive agitation du mélange. On peut également stabiliser l'émulsion par l'ajout d'un tensio-actif ou d'un système de tensio-actifs. La stabilisation peut également se faire par l'ajout d'un épaississant.

Les formulations aqueuses décrites peuvent être utilisées pour le décapage grand public (formules épaissies), le décapage bâtiment professionnel (formules épaissies), le décapage industriel (formules non épaissies) et, enfin, le décapage aéronautique (formules épaissies). Ces formulations épaissies ou non peuvent, comme déjà indiqué, contenir un activateur, un retardateur d'évaporation ou un inhibiteur de corrosion.

Les exemples qui suivent permettront de se faire une idée plus précise de l'invention. Toutes les proportions citées dans les exemples sont en parties en poids.

### EXEMPLE 1

On a utilisé, comme composition décapante, du benzaldéhyde commercial "B", contenant 1% en poids d'acide benzoïque, ou un mélange eau/benzaldéhyde commercial 70/30, désigné ci-après "E/B 70/30".

Les tests de décapage ont été effectués sur une peinture glycérophtalique déposée sur bois. S'agissant d'une vieille peinture, on a un haut degré de réticulation. Deux disques de coton, imprégnés de solvant, sont disposés sur les échantillons et recouverts par le couvercle d'une boîte de Pétri pour limiter l'évaporation. Le décapage a été suivi pendant 24 heures et quantifié par un système de notation compris entre 0 (aucune action) et 5 (décapage de toutes les couches de peinture avec mise à nu du subjectile). Les conventions adoptées pour attribuer les notes intermédiaires sont données ci-après :
- Note 0 =: aucune action
- Note 1 =: apparition de quelques cloques
- Note 2 =: formation de quelques écailles
- Note 3 =: soulèvement des premières couches avec formation d'écailles
- Note 4 =: soulèvement de toutes les couches sauf la dernière
- Note 5 =: subjectile mis à nu par soulèvement de la totalité des couches.

L'eau et le benzaldéhyde n'étant pas miscibles, le mélange eau-benzaldéhyde se trouve sous la forme d'une émulsion. Cette émulsion très instable est homogénéisée en aspirant et rejetant le mélange plusieurs fois dans le flacon avant imprégnation du coton.

**Tableau 1 :**

| Pouvoir décapant à 20°C de "B" et "E/B (70/30)" sur une peinture glycérophtalique appliquée sur bois | | |
|---|---|---|
| Temps | Note | |
| | B | E/B (70/30) |
| 5 min. | 0 | 1 |
| 10 min. | 0 | 3 |
| 15 min. | 1 | 4 |
| 20 min. | 3 | 4 |
| 25 min. | 4 | 4 |
| 30 min. | 4 | 4 |
| 1 h | 5 | 5 |
| 2 h | 5 | 5 |
| 24 h | 5 | 5 |

Au bout d'une heure, "B" et "E/B (70/30)" ont mis complètement à nu le subjectile. Cependant, on constate que la formule "E/B (70/30)" est plus rapide que B. Il existe donc une synergie entre l'eau et le benzaldéhyde qui se traduit sur cette peinture glycérophtalique par un effet d'accélération aux temps courts (inférieurs à 30 min.)

### EXEMPLE 2

Les tests de décapage ont été effectués dans cet exemple sur une peinture époxy électrodéposée par cataphorèse sur acier phosphaté. Deux disques de coton imprégnés de solvant sont disposés sur les échantillons et recouverts par le couvercle d'une boîte de Pétri pour limiter l'évaporation. Le décapage a été suivi pendant 24 heures et quantifié par un système de notation compris entre 0 (aucune action) et 5 (mise à nu du subjectile). Les conventions adoptées pour attribuer les notes intermédiaires sont données ci-dessous :
- Note 0 =: aucune action
- Note 1 =: 20% de la surface est cloquée
- Note 2 =: 40% de la surface est cloquée
- Note 3 =: 60% de la surface est cloquée
- Note 4 =: 80% de la surface est cloquée
- Note 5 =: soulèvement total du film de peinture.

Les résultats obtenus sont donnés dans le Tableau 2 ci-dessous :

**Tableau 2 :**

| Pouvoir décapant à 20°C de "B" et "E/B (70/30)" sur une peinture époxy appliquée sur acier. (B = benzaldéhyde commercial) | | |
|---|---|---|
| Temps | Note | |
| | B | E/B (70/30) |
| 10 min. | 0 | 0 |
| 20 min. | 0 | 0 |
| 30 min. | 0 | 0 |
| 1 h | 0 | 0 |
| 2 h | 0 | 5 |
| 4 h | 0 | 5 |
| 24 h | 5 | 5 |

La peinture époxy se décolle de son support au bout de 2 heures avec la composition "E/B (70/30)". En revanche, il faut attendre 24 heures pour avoir le même effet avec "B". Ces résultats montrent bien la supériorité de la composition de type "E/B" et donc l'effet de synergie par rapport à "B".

### EXEMPLE 3

Dans cet exemple, la peinture à décaper ainsi que les conditions de décapage sont strictement identiques à celles de l'Exemple 2.

Il a été montré dans cet exemple l'effet du benzoate de sodium comme activateur sur la composition de type "E/B". Le benzoate de sodium a été utilisé à raison de 1% en poids par rapport au benzaldéhyde. Les résultats obtenus sont donnés dans le Tableau 3.

**Tableau 3 :**

| Effet du benzoate de sodium sur le mélange "E/B (70/30)" pour le décapage d'une peinture époxy à T = 20°C, B = benzaldéhyde commercial | | |
|---|---|---|
| Temps | Note | |
| | E/B (70/30) | E/B (70/30) + benzoate de sodium |
| 1 h | 0 | 2 |
| 1 h 10 | 1 | 5 |
| 1 h 20 | 2 | 5 |
| 1 h 30 | 3 | 5 |
| 1 h 40 | 5 | 5 |

On constate que le benzoate de sodium a pour effet d'accélérer le décapage utilisant la composition "E/B (70/30)".

### EXEMPLE 4

Dans cet exemple, il a été utilisé des peintures de l'industrie automobile, des laques polyester blanc glacier 389 d'HERBERTS, fournies par la société ETALON (France). L'épaisseur du revêtement est de 35 à 45 µm. Les plaques métalliques utilisées sont en acier phosphaté et ont une surface recouverte rectangulaire de 90 x 190 mm. Les performances sur ces plaques sont généralisables à d'autres peintures plus faciles à décaper que les peintures polyester, ce qui est généralement le cas pour les glycérophtlaliques, les alkydes et les acryliques. Les résultats figurent dans le Tableau 4.

**Tableau 4 :**

| Pouvoir décapant à 20°C de "B", "E/B", "E/B/T" (T = toluène) sur une peinture polyester. B = benzaldéhyde commercial | |
|---|---|
| Formule | Temps de décapage en min. |
| B | 12 |
| E/B (50/50) | 12 |
| E/B/T (50/45/5) | 7 |
| E/B (95/5) | 10 |
| E/B/T (90/5/5) | 7 |

Sur cette peinture polyester, le pouvoir décapant de "B" est conservé même lorsqu'on le dilue dans l'eau à 50% ou 5%. Dans les mélanges dilués, l'addition de 5% de toluène conduit à une très nette amélioration du pouvoir décapant. Cet exemple montre la possibilité de faire les mélanges qui contiennent beaucoup d'eau et qui sont très efficaces (90% d'eau et 10% de solvant).

Les Exemples 3 et 4 montrent donc que le benzoate de sodium et le toluène peuvent être de très bons activateurs des mélanges E/B.

### EXEMPLE 5

Dans cet exemple, la peinture à décaper ainsi que les conditions de décapage sont strictement identiques à celles de l'Exemple 4.

Il a été montré dans cet exemple la spécificité du benzaldéhyde à donner d'excellentes performances en décapage peintures. Pour cela, on a testé des petites molécules (qui sont donc plus aptes à diffuser dans le film de peinture) et qui contiennent la fonction aldéhyde-CHO. On a également testé des molécules dont la structure est très voisine de celle du benzaldéhyde.

Les résultats sont donnés dans le Tableau 5.

**Tableau 5 :**

| Pouvoir décapant à 20°C de molécules contenant la fonction aldéhyde sur une peinture polyester. | |
|---|---|
| Composé | Temps de décapage |
| Formaldéhyde | >1 h |
| Formamide | >1 h |
| Formiate de méthyle | >1 h |
| 4-méthoxy benzaldéhyde | >1 h |
| 1,3,5-triméthyl benzaldéhyde | >1 h |
| Alcool benzylique | >1 h |
| Benzaldéhyde | 12 min. |

### EXEMPLE 6 à 11 (de l'invention) et 12 (comparatif)

La peinture à décaper ainsi que les conditions de décapage sont strictement identiques à celles de l'Exemple 4. Les compositions décapantes mises en oeuvre figurent dans le Tableau 6, les abréviations suivantes ayant été utilisées :
- E =: Eau
- B =: Benzaldéhyde commercial
- T =: Toluène
- X =: Xylène
- AN =: Anisole (méthoxy benzène)
- AB =: Alcool benzylique
- ab =: Acide benzoïque

Les résultats obtenus sont donnés également dans le tableau 6.

**Tableau 6 :**

| Pouvoir décapant à 20°C de mélanges à base de composés aromatiques additivés d'acide benzoïque sur une peinture polyester. | | |
|---|---|---|
| Exemple | Composition | Temps de décapage en min. |
| 6 | E/B (50/50) | 12 |
| 7 | E/T/ab (50/45/5) | 13 |
| 8 | E/B (95/5) | 10 |
| 9 | E/T/ab (90/5/5) | 40 |
| 10 | E/AN/ab (50/45/5) | 20 |
| 11 | E/X/ab (50/45/5) | 32 |
| 12 | E/AB/ab (50/45/5) | 700 |

### EXEMPLE 13

Le test de décapage est identique à celui de l'Exemple 4. Il a été effectué sur une formule épaissie du type :

| | |
|---|---|
| Eau | 50 |
| Anisole | 40 |
| Benzaldéhyde commercial | 10 |
| Coupe d'ester méthylique éthoxylé comprenant 20 motifs d'oxyde d'éthylène, commercialisé par la Société "SEPPIC" sous la dénomination "METOX 20OE" | 1 |
| Epaississant cellulosique commercialisé par la Société "DOW CHEMICAL Co" sous la dénomination "METHOCELL 311" | 1,3 |

Cette formule épaissie, très stable, a conduit à un temps de 18 min. sur plaque POLYESTER ETALON.

## Revendications

1. Composition décapante pour peintures, vernis ou laques recouvrant un substrat, caractérisée par le fait qu'elle est constituée par ou qu'elle comprend :
(A) un mélange (A1) d'au moins un solvant aromatique choisi parmi le benzaldéhyde, le toluène, le xylène et l'anisole et (A2) d'acide benzoïque ;
(B) jusqu'à 99 parties en poids d'eau ;
(A) + (B) représentant au total 100 parties en poids.

2. Composition décapante selon la revendication 1, caractérisée par le fait que (A) est constitué par un benzaldéhyde qui contient de l'acide benzoïque à un taux inférieur ou égal à 1% en poids.

3. Composition selon la revendication 2, caractérisée par le fait que le benzaldéhyde qui contient de l'acide benzoïque à un taux inférieur ou égal à 1% en poids, constituant le composant (A), représente 5 à 10 parties en poids pour 100 parties en poids de (A) + (B).

4. Composition selon l'une des revendications 1 et 2, caractérisée par le fait que ses composants sont présents dans les proportions suivantes :
| | | |
|---|---|---|
| (A1) | solvant(s) aromatique(s) | 30-70 parties en poids |
| (A2) | acide benzoïque | 0,05-10 parties en poids |
| (B) | eau | 30-70 parties en poids |

5. Composition selon l'une des revendications 1 à 4, caractérisée par le fait qu'elle contient en outre au moins un activateur, à raison de 0,1 à 10 parties en poids par rapport à (A) + (B)

6. Composition selon la revendication 5, caractérisée par le fait que l'activateur est choisi parmi le benzoate de sodium et, dans le cas où le solvant aromatique est le benzaldéhyde, le toluène, le benzoate de sodium jouant également le rôle d'inhibiteur de corrosion.

7. Composition selon l'une des revendications 1 à 6, caractérisée par le fait qu'elle contient en outre au moins un épaississant, à raison de 0,1 à 10 parties en poids pour 100 parties en poids de (A) + (B).

8. Composition selon la revendication 7, caractérisée par le fait que l'épaississant est choisi parmi les épaississants acryliques et cellulosiques.

9. Composition selon l'une des revendications 1 à 8, caractérisée par le fait qu'elle contient en outre au moins un inhibiteur de corrosion, à raison de 0,1 à 10 parties en poids pour 100 parties en poids de (A) + (B).

10. Composition selon la revendication 9, caractérisée par le fait que l'inhibiteur de corrosion est choisi parmi la monoéthanolamine, le benzoate de sodium et l'acide citrique.

11. Composition selon l'une des revendications 1 à 10, caractérisée par le fait qu'elle contient en outre au moins un retardateur d'évaporation, à raison de 0,1 à 10 parties en poids pour 100 parties en poids de (A) + (B).

12. Composition selon l'une des revendications 1 à 11, caractérisée par le fait qu'elle contient en outre au moins un agent tensio-actif, à raison de 0,1 à 10 parties en poids pour 100 parties en poids de (A) + (B).

13. Composition selon la revendication 12, caractérisée par le fait que l'agent tensio-actif est choisi parmi les agents tensio-actifs non-ioniques.

## Patentansprüche

1. Abbeizzusammensetzung für Anstrichfarben, Firnisse oder Lakke, die einen Träger bedecken,
dadurch gekennzeichnet, daß sie aus
(A) einem Gemisch (A1) aus mindestens einem aromatischen Lösungsmittel, das unter Benzaldehyd, Toluol, Xylol und Anisol ausgewählt ist, und (A2) Benzoesäure,
(B) bis zu 99 Gew.-Teile Wasser
besteht oder daß sie (A) und (B) enthält, wobei (A) und (B) zusammen 100 Gew.-Teilen entsprechen.

2. Abbeizzusammensetzung nach Anspruch 1, dadurch gekennzeichnet, daß (A) aus einem Benzaldehyd besteht, das Benzoesäure in einem Anteil von weniger als oder gleich 1 Gew.-% enthält.

3. Zusammensetzung nach Anspruch 2, dadurch gekennzeichnet, daß der Benzaldehyd, der Benzoesäure in einem Anteil von weniger als oder gleich 1 Gew.-% enthält und der den Bestandteil (A) bildet, 5 bis 10 Gew.-Teile pro 100 Gew.-Teile (A) + (B) ausmacht.

4. Zusammensetzung nach einem der Ansprüche 1 und 2, dadurch gekennzeichnet, daß die Bestandteile in den folgenden Anteilen enthalten sind:
| | | |
|---|---|---|
| (A1) | Aromatische(s) Lösungsmittel | 30-70 Gew.-Teile |
| (A2) | Benzoesäure | 0,05-10 Gew.-Teile |
| (B) | Wasser | 30-70 Gew.-Teile. |

5. Zusammensetzung nach einem der Ansprüche 1 bis 4, dadurch gekennzeichnet, daß sie außerdem mindestens einen Aktivator in einem Anteil von 0,1 bis 10 Gew.-Teilen, bezogen auf (A) + (B), enthält.

6. Zusammensetzung nach Anspruch 5, dadurch gekennzeichnet, daß der Aktivator unter Natriumbenzoat und in dem Fall, in dem das aromatische Lösungsmittel aus Benzaldehyd besteht, unter Toluol ausgewählt wird, wobei das Natriumbenzoat außerdem die Bedeutung eines Korrosionsinhibitors hat.

7. Zusammensetzung nach einem der Ansprüche 1 bis 6, dadurch gekennzeichnet, daß sie außerdem mindestens ein Verdickungsmittel in einem Anteil von 0,1 bis 10 Gew.-Teilen pro 100 Gew.-Teile (A) + (B) enthält.

8. Zusammensetzung nach Anspruch 7, dadurch gekennzeichnet, daß das Verdickungsmittel unter den Acryl-Verdickungsmitteln und den Cellulose-Verdickungsmitteln ausgewählt ist.

9. Zusammensetzung nach einem der Ansprüche 1 bis 8, dadurch gekennzeichnet, daß sie außerdem mindestens einen Korrosionsinhibitor in einem Anteil von 0,1 bis 10 Gew.-Teilen pro 100 Gew.-Teile (A) + (B) enthält.

10. Zusammensetzung nach Anspruch 9, dadurch gekennzeichnet, daß der Korrosionsinhibitor unter Monoethanolamin, Natriumbenzoat und Citronensäure ausgewählt ist.

11. Zusammensetzung nach einem der Ansprüche 1 bis 10, dadurch gekennzeichnet, daß sie außerdem mindestens einen die Verdampfung verzögernden Stoff in einem Anteil von 0,1 bis 10 Gew.-Teilen pro 100 Gew.-Teile (A) + (B) enthält.

12. Zusammensetzung nach einem der Ansprüche 1 bis 11, dadurch gekennzeichnet, daß sie außerdem mindestens einen grenzflächenaktiven Stoff in einem Anteil von 0,1 bis 10 Gew.-Teilen pro 100 Gew.-Teile (A) und (B) enthält.

13. Zusammensetzung nach Anspruch 12, dadurch gekennzeichnet, daß der grenzflächenaktive Stoff unter den nichtionischen grenzflächenaktiven Stoffen ausgewählt ist.

## Claims

1. Composition for stripping paints, varnishes or lacquers coating a substrate, characterized in that it consists of or comprises :
(A) a mixture (Al) of at least one aromatic solvent chosen from benzaldehyde, toluene, xylene and anisole and (A2) of benzoic acid ;
(B) up to 99 parts by weight of water ;
(A) + (B) representing in total 100 parts by weight.

2. Stripping composition according to Claim 1, characterized in that (A) consists of a benzaldehyde which contains benzoic acid at a level equal to or less than 1% by weight.

3. Composition according to Claim 2, characterized in that the benzaldehyde which contains benzoic acid at a level equal to or less than 1% by weight, constituting the component (A), represents 5 to 10 parts by weight per 100 parts by weight of (A) + (B).

4. Composition according to either of Claims 1 and 2, characterized in that its components are present in the following proportions :
| | | |
|---|---|---|
| (A1) | aromatic solvent(s) | 30-70 parts by weight |
| (A2) | benzoic acid | 0.05-10 parts by weight |
| (B) | water | 30-70 parts by weight. |

5. Composition according to one of Claims 1 to 4, characterized in that it also contains at least one activator in a proportion of from 0.1 to 10 parts by weight relative to (A) + (B).

6. Composition according to Claim 5, characterized in that the activator is chosen from sodium benzoate and, when the aromatic solvent is benzaldehyde, toluene, sodium benzoate also acting as a corrosion inhibitor.

7. Composition according to one of Claims 1 to 6, characterized in that it also contains at least one thickener in a proportion of from 0.1 to 10 parts by weight per 100 parts by weight of (A) + (B).

8. Composition according to Claim 7, characterized in that the thickener is chosen from cellulosic and acrylic thickeners.

9. Composition according to one of Claims 1 to 8, characterized in that it also contains at least one corrosion inhibitor in a proportion of from 0.1 to 10 parts by weight per 100 parts by weight of (A) + (B).

10. Composition according to Claim 9, characterized in that the corrosion inhibitor is chosen from monoethanolamine, sodium benzoate and citric acid.

11. Composition according to one of Claims 1 to 10, characterized in that it also contains at least one evaporation retardant in a proportion of from 0.1 to 10 parts by weight per 100 parts by weight of (A) + (B).

12. Composition according to one of Claims 1 to 11, characterized in that it also contains at least one surfactant in a proportion of from 0.1 to 10 parts by weight per 100 parts by weight of (A) + (B).

13. Composition according to Claim 12, characterized in that the surfactant is chosen from nonionic surfactants.
